# EUROPEAN PATENT APPLICATION

(11) **EP 4 074 505 A1**
(43) Date of publication of application: **19.10.2022**
(21) Application number: 20898729.7
(22) Date of filing: 10.12.2020
(51) Int. Cl.: B32B 17/10, B32B 27/30, B32B 27/40, C03C 27/12

(54) **INTERMEDIATE FILM FOR LAMINATED GLASS AND LAMINATED GLASS**

(30) Priority: 11.12.2019 JP 2019223528
(71) Applicant: SEKISUI CHEMICAL CO., LTD., Osaka-shi Osaka 530-8565 (JP)
(72) Inventor: OOHIGASHI, Yuji, Mishima-gun, Osaka 618-0021 (JP); TERAGUCHI, Yumiko, Mishima-gun, Osaka 618-0021 (JP)
(74) Representative: Ter Meer Steinmeister & Partner
(86) International application number: PCT/JP2020/046158
(87) International publication number: WO 2021/117833

(57) **Abstract**

The interlayer film for laminated glass of the present invention comprises a thermoplastic resin and has a shear storage elastic modulus at 30°C of 1.5 MPa or less. According to the present invention, an interlayer film for laminated glass can be provided which can allow for sufficient suppression of warpage in a case where laminated glass is obtained by allowing inorganic glass and organic glass to adhere.

## Description

### Technical Field

The present invention relates to, for example, an interlayer film for laminated glass, for use in laminated glass, and laminated glass comprising the interlayer film for laminated glass.

### Background Art

Conventionally, laminated glass obtained by interposing an interlayer film for laminated glass between two glass plates and integrating them is widely known. Such an interlayer film for laminated glass is often formed from a plasticized polyvinyl acetal in which a plasticizer is compounded into a polyvinyl acetal resin. Laminated glass is widely used as window glass for, for example, vehicles such as automobile, airplanes, and architectural structures because of less causing glass debris to fly even if subjected to an external impact, and thus being safe.

Although inorganic glass is generally widely used for glass plates in laminated glass, a problem of inorganic glass is heavy weight, occurrence of cracks when subjected to an impact, and the like. Thus, organic glass such as a polycarbonate plate or a polymethyl methacrylate plate may be sometimes used for one of such plates for laminated glass.

Laminated glass is generally produced by placing an interlayer film for laminated glass between two glass plates and subjecting them to thermocompression bonding under high-temperature and high-pressure in an autoclave or the like. However, if one of the two glass plates in such laminated glass is organic glass, warpage may occur due to the difference in coefficient of linear expansion between inorganic glass and organic glass during returning to room temperature after thermocompression bonding.

PTL 1 discloses suppression of warpage with a glass laminate having a laminate structure in which a hard resin sheet (organic glass) is laminated on an inorganic glass plate with an interlayer film being interposed therebetween, wherein the hard resin sheet has a glass transition temperature, an optical transmittance, a storage elastic modulus, and a loss tangent tanδ in respective specified ranges.

PTL 2 discloses suppression of warpage with an interlayer film in which polyvinyl butyral film/resin layer higher in viscosity at room temperature than polyvinyl butyral film/polyvinyl butyral film are laminated in the listed order.

### Citation List

### Patent Literature

PTL 1: WO 2018/159520
PTL 2: JP 10-119184 A

### Summary of Invention

### Technical Problem

However, it has been found that, although the interlayer films described in PTLs 1 and 2 achieved the effect of reducing warpage at a certain level, they easily cause warpage to occur, for example, when the temperature after thermocompression bonding with organic glass and inorganic glass is less than room temperature. In other words, warpage occurs under severer conditions than conventional conditions and there is a need for improvement.

An object of the present invention is to provide an interlayer film for laminated glass, which can allow for sufficient suppression of warpage even in a case where laminated glass is obtained by allowing inorganic glass and organic glass to adhere.

### Solution to Problem

The present inventors have made intensive studies, and as a result, have found that warpage can be sufficiently suppressed with an interlayer film for laminated glass, the film comprising a thermoplastic resin and having a shear storage elastic modulus at 30°C, equal to or less than a certain value, and thus have completed the following present invention.

Specifically, the present invention provides the following [1] to [14].
[1] An interlayer film for laminated glass, comprising a thermoplastic resin and having a shear storage elastic modulus at 30°C of 1.5 MPa or less.
[2] The interlayer film for laminated glass according to [1], having a glass transition temperature of 30°C or less.
[3] The interlayer film for laminated glass according to [1] or [2], comprising a first resin layer, a second resin layer and a third resin layer, wherein the first resin layer is placed between the second resin layer and the third resin layer.
[4] The interlayer film for laminated glass according to [3], wherein the first resin layer comprises at least an acrylic resin.
[5] The interlayer film for laminated glass according to [3] or [4], wherein the second resin layer and the third resin layer each comprise at least a polyurethane resin.
[6] The interlayer film for laminated glass according to [5], wherein the polyurethane resin comprises an aliphatic or alicyclic isocyanate.
[7] The interlayer film for laminated glass according to [5] or [6], wherein the polyurethane resin has a hard segment mass ratio of 30% or more and 55% or less.
[8] The interlayer film for laminated glass according to any of [5] to [7], wherein the polyurethane resin comprises a polyether-based polyol.
[9] The interlayer film for laminated glass according to any of [3] to [8], wherein the first resin layer has a thickness of 50 µm or more and 500 µm or less, and the second resin layer and the third resin layer each have a thickness of 50 µm or more and 1000 µm or less.
[10] The interlayer film for laminated glass according to any of [3] to [9], wherein a ratio of the thickness of the second resin layer to the thickness of the first resin layer (thickness of second resin layer/thickness of first resin layer) is 1 or more and 6 or less, and a ratio of the thickness of the third resin layer to the thickness of the first resin layer (thickness of third resin layer/thickness of first resin layer) is 1 or more and 6 or less.
[11] The interlayer film for laminated glass according to any of [1] to [10], having a thickness of 200 µm or more and 2000 µm or less.
[12] The interlayer film for laminated glass according to any of [1] to [11], wherein a content of a plasticizer is less than 10 parts by mass based on 100 parts by mass of the resin contained in the entire interlayer film.
[13] Laminated glass comprising the interlayer film for laminated glass according to any of [1] to [12], and a pair of glass members laminated with the interlayer film for laminated glass interposed therebetween.
[14] The laminated glass according to [13], wherein one of the glass members is inorganic glass and other of the glass members is organic glass.

### Advantageous Effects of Invention

According to the interlayer film for laminated glass of the present invention, warpage can be sufficiently suppressed even in a case where laminated glass is obtained by allowing inorganic glass and organic glass to adhere.

### Brief Description of Drawings

[Fig. 1] Fig. 1 illustrates one embodiment of laminated glass in a case where an interlayer film for laminated glass has a monolayer structure.
[Fig. 2] Fig. 2 illustrates one embodiment of laminated glass in a case where an interlayer film for laminated glass has a multilayer structure.

### Description of Embodiments

Hereinafter, the interlayer film for laminated glass of the present invention is described in detail.

### [Interlayer film for laminated glass]

The interlayer film for laminated glass of the present invention (hereinafter, sometimes simply referred to as "interlayer film") comprises a thermoplastic resin and has a shear storage elastic modulus at 30°C of 1.5 MPa or less. The interlayer film for laminated glass of the present invention is placed between organic glass and inorganic glass, and is suitably used as an interlayer film for allowing such organic glass and inorganic glass to adhere.

If the interlayer film has a shear storage elastic modulus at 30°C of more than 1.5 MPa, warpage easily occurs due to the difference in coefficient of linear expansion between organic glass and inorganic glass in cooling to 23°C or about 10°C after placing of the interlayer film between the organic glass and the inorganic glass and thermocompression bonding of the resultant.

In this regard, when the shear storage elastic modulus is 1.5 MPa or less, warpage can be sufficiently suppressed even in the case of cooling to 23°C or furthermore about 10°C after thermocompression bonding. In addition, warpage can be suppressed even in the case of cooling to about 10°C after compression bonding under pressure, and thus the temperature in cooling after thermocompression bonding can be set in a relatively wide temperature range and therefore productivity of laminated glass is also enhanced.

The interlayer film preferably has a shear storage elastic modulus at 30°C of 1.2 MPa or less, more preferably 1.0 MPa or less, further preferably 0.5 MPa or less from the viewpoint that the occurrence of warpage is more suppressed in cooling to about 10°C and 23°C after thermocompression bonding. The interlayer film here preferably has a shear storage elastic modulus at 30°C of 0.1 MPa or more from the viewpoint that the interlayer film is prevented from being reduced in mechanical strength.

The shear storage elastic modulus at 30°C of the interlayer film can be adjusted in a desired range by appropriately modulating the type of the thermoplastic resin contained in the interlayer film, or the type of resin and the thickness of each layer in the case of the interlayer film having a multilayer structure as described below. The shear storage elastic modulus at 30°C of the interlayer film can be here measured by a method described in Examples.

### (Glass transition temperature)

The interlayer film of the present invention preferably has a glass transition temperature of 30°C or less from the viewpoint that warpage in cooling to about 10°C and 23°C after thermocompression bonding is suppressed. The interlayer film preferably has a glass transition temperature of 15°C or less, more preferably has a glass transition temperature of 0°C or less, further preferably has a glass transition temperature of -10°C or less, and still further preferably has a glass transition temperature of -14°C or less from the viewpoint that warpage, in particular, warpage in cooling to about 10°C after thermocompression bonding is more suppressed. The interlayer film may have, for example, a glass transition temperature of -50°C or more, practically, for example, a glass transition temperature of -45°C or more, without particular limitation.

The glass transition temperature can be measured by reading the peak temperature at a loss tangent tanδ obtained from the results of viscoelasticity measurement, and a first peak temperature at the lower temperature side in a temperature region from -50 to 150°C is defined as the glass transition temperature (Tg).

The method for adjusting the glass transition temperature is not particularly limited, and, in the case of a monolayer structure, the glass transition temperature (Tg) of a thermoplastic resin forming the monolayer structure may be in the above-mentioned range. Alternatively, in the case of a multilayer structure, the glass transition temperature (Tg) of a thermoplastic resin forming any of a core layer and a skin layer may be in the above-mentioned range, the glass transition temperature (Tg) of a thermoplastic resin forming the core layer is preferably in the above-mentioned range, and the glass transition temperature (Tg) of an acrylic resin forming the core layer is more preferably in the above-mentioned range. The glass transition temperature (Tg) of the acrylic resin forming the core layer can be adjusted by appropriately selecting the type of an acrylic monomer forming the acrylic polymer, as described below.

### (Layer configuration of interlayer film)

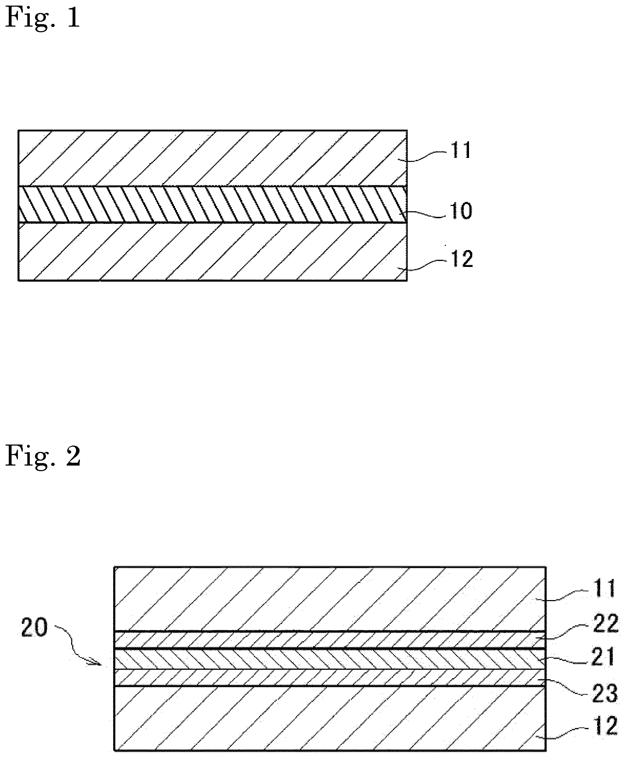

The interlayer film of the present invention may be an interlayer film 10 of a monolayer structure, as illustrated in Fig. 1, or may have a multilayer structure in which a plurality of resin layers are provided. The interlayer film of a monolayer structure is, for example, an interlayer film 10 comprising a single resin layer illustrated in Fig. 1. Laminated glass 10 is formed which comprises the interlayer film 10 and a pair of glass members 11 and 12 laminated with the interlayer film 10 being interposed therebetween.

The interlayer film having a multilayer structure is, for example, an interlayer film 20 comprising a first resin layer 21, a second resin layer 22 and a third resin layer 23, the first resin layer 21 being placed between the second resin layer 22 and the third resin layer 23, as illustrated in Fig. 2. Laminated glass 20 may be formed in which the second resin layer 22 and the third resin layer 23 in the interlayer film 20 are respectively bonded to the pair of glass members 11 and 12. In the following description, the first resin layer 21 may also be sometimes referred to as "core layer", and the second resin layer 22 and the third resin layer 23 may also be each sometimes referred to as "skin layer".

In such each laminated glass, preferably, the glass member 11 as one of the glass members 11 and 12 is inorganic glass and the glass member 12 as other thereof is organic glass.

The interlayer film is preferably the interlayer film having a multilayer structure, among the above, and is, in particular, more preferably an interlayer film of a trilayer structure comprising three layers, the first to third resin layers 21 to 23, because the type of resin of each of the resin layers is appropriately selected to thereby allow the laminated glass to be not only suppressed in warpage, but also easily reduced in occurrence of any cell, clouding, and the like.

The thermoplastic resin contained in the interlayer film is not particularly limited as long as the interlayer film has a shear storage elastic modulus at 30°C in the above-mentioned range, and examples thereof include a (meth)acrylic resin, a polyurethane resin, a polyvinyl acetal resin and an ethylene-vinyl acetate copolymer resin, or a modified resin and a composite resin thereof. Among these thermoplastic resins, at least one selected from the group consisting of an acrylic resin and a polyurethane resin is preferable. The details of these thermoplastic resins are described below.

A resin layer forming the interlayer film of a monolayer structure and resin layers forming the multilayer structure each comprise a thermoplastic resin, and such a thermoplastic resin is not particularly limited with respect to the type thereof and can be, for example, any of those described above, and is in particular preferably at least one selected from the group consisting of an acrylic resin and a polyurethane resin. The resin layers forming the multilayer structure may be formed from respective thermoplastic resins which are the same kind of thermoplastic resins or different kinds of thermoplastic resins. The single resin layer, and the resin layers (for example, the first resin layer, the second resin layer and the third resin layer) forming the multilayer structure are each preferably formed from only one kind of thermoplastic resin. When these resin layers are each formed from only one of thermoplastic resin, no phase separation structure is formed and light scattering in each of these layers is suppressed, resulting in an enhancement in transparency of the interlayer film.

The content of the thermoplastic resin in the single resin layer is preferably 80% by mass or more, more preferably 90% by mass or more, further preferably 95% by mass or more based on the total amount of the resin layer, and the upper limit is 100% by mass. The content of the thermoplastic resin in each of the resin layers forming the multilayer structure is also similarly preferably 80% by mass or more, more preferably 90% by mass or more, further preferably 95% by mass or more based on the total amount of each of the layers, and the upper limit is 100% by mass.

In a case where the interlayer film comprises the single resin layer, the resin layer preferably comprises at least a polyurethane resin. The interlayer film, which comprises a polyurethane resin, is thus enhanced in adhesiveness thereof to organic glass. The polyurethane resin forming the single resin layer is preferably a polyurethane resin high in flexibility in order to reduce the shear storage elastic modulus at 30°C of the interlayer film. The structure of the polyurethane resin is described below.

The single resin layer, when comprises the polyurethane resin, may also comprise a resin other than the polyurethane resin, and the content of the polyurethane resin is preferably 30% by mass or more, more preferably 50% by mass or more, further preferably 70% by mass or more, still further preferably 90% by mass or more, most preferably 100% by mass based on the total amount of the thermoplastic resin in the resin layer.

In a case where the interlayer film has the multilayer structure comprising the first to third resin layers, the first resin layer preferably comprises at least an acrylic resin. When an acrylic resin is used in the first resin layer, a monomer forming the acrylic resin is appropriately adjusted as described below to thereby allow the shear storage elastic modulus at 30°C of the interlayer film to be easily adjusted to 1.5 MPa or less and allow warpage of the interlayer film to be easily suppressed.

While the first resin layer may comprise a resin other than the acrylic resin, the content of the acrylic resin is preferably 30% by mass or more, more preferably 50% by mass or more, further preferably 70% by mass or more, still further preferably 90% by mass or more, most preferably 100% by mass based on the total amount of the thermoplastic resin in the first resin layer.

The second resin layer and the third resin layer in the multilayer structure each preferably comprise a polyurethane resin. In a case where the acrylic resin is used in the first resin layer as described above, the second resin layer and the third resin layer more preferably each comprise a polyurethane resin.

When the polyurethane resin is contained in each of the skin layers, adhesiveness of the interlayer film to organic glass is enhanced. Although organic glass easily generates outgas as compared with inorganic glass and therefore any cell easily occurs also in the interlayer film, the polyurethane resin is used to thereby easily reduce the occurrence of any cell. While the detail is described below, the occurrence of warpage and any cell can also be effectively suppressed by appropriately selecting the types of a long-chain polyol component, an isocyanate component and a short-chain diol (chain extender) forming the polyurethane resin.

While the second resin layer and the third resin layer may each comprise a resin other than the polyurethane resin, the content of the polyurethane resin is preferably 30% by mass or more, more preferably 50% by mass or more, further preferably 70% by mass or more, still further preferably 90% by mass or more, most preferably 100% by mass based on the total amount of the thermoplastic resin in each of the resin layers.

The thickness of the interlayer film is not particularly limited, and is preferably 200 µm or more, more preferably 300 µm or more, and preferably 2000 µm or less, more preferably 1300 µm. Such a range can allow the interlayer film to be suitably used.

In a case where the interlayer film has the multilayer structure comprising the first to third resin layers, the thickness of each of the layers is preferably regulated as follows from the viewpoint of suppression of the occurrence of warpage and the occurrence of any cell, and in particular, in a case where the first resin layer comprises the acrylic resin and the second and third resin layers each comprise the polyurethane resin, the thickness of each of the resin layers is preferably regulated as follows.

The thickness of the first resin layer is preferably 50 µm or more, more preferably 100 µm or more, and preferably 500 µm or less, more preferably 300 µm or less. When the thickness of the first resin layer is equal to or more than the lower limit value, the shear storage elastic modulus is easily reduced and warpage is also easily suppressed. When the thickness of the first resin layer is equal to or less than the upper limit value, the thicknesses of the second resin layer and the third resin layer can be each equal to or more than a certain value without an excessive increase in thickness of the entire interlayer film, and adhesiveness to organic glass can be enhanced and the occurrence of any cell can be suppressed.

The thicknesses of the second resin layer and the third resin layer are each preferably 50 µm or more, more preferably 100 µm or more, and preferably 1000 µm or less, more preferably 600 µm or less. When the thicknesses of the second and third resin layers are each equal to or more than the lower limit value, adhesiveness to organic glass is enhanced and the occurrence of any cell is easily suppressed, and when the thicknesses are each equal to or less than the upper limit value, the thickness of the first resin layer can be equal to or more than a certain value without an excessive increase in thickness of the entire interlayer film, and warpage is easily suppressed.

The ratio of the thickness of the second resin layer to the thickness of the first resin layer (thickness of second resin layer/thickness of first resin layer) is preferably 1 or more, more preferably 1.3 or more, and preferably 6 or less, more preferably 5 or less.

The ratio of the thickness of the third resin layer to the thickness of the first resin layer (thickness of third resin layer/thickness of first resin layer) is preferably 1 or more, more preferably 1.3 or more, and preferably 6 or less, more preferably 5 or less.

When the thickness ratio among the resin layers are adjusted as described above, not only warpage is suppressed, but also the occurrence of any cell is easily prevented.

### (Polyurethane resin)

The polyurethane resin for use in the present invention is a thermoplastic polyurethane resin, and is usually obtained by a reaction of a long-chain polyol component, an isocyanate component and a short-chain diol component. In other words, the polyurethane resin in the present invention is a resin containing respective constituent units derived from a long-chain polyol component, an isocyanate component and a short-chain diol component. The polyurethane resin has a structure in which a soft segment formed by a reaction of a long-chain polyol and isocyanate and a hard segment formed by a reaction of a short-chain diol and isocyanate are bound to each other.

The polyurethane resin may be used singly or in combinations of two or more kinds thereof in each of the layers forming the interlayer film, and is preferably used singly from the viewpoint of an enhancement in transparency of each of the layers.

### <Long-chain polyol component>

The long-chain polyol component contained in the polyurethane resin is a polyol having a molecular weight of 250 or more.

The molecular weight of the long-chain polyol is preferably 500 or more, more preferably 600 or more. In a case where the molecular weight of the long-chain polyol is equal to or more than the lower limit value, the shear storage elastic modulus at 30°C of the interlayer film can be reduced and warpage is easily suppressed. The molecular weight of the long-chain polyol is preferably 2000 or less from the viewpoint that the interlayer film is prevented from being excessively reduced in mechanical strength.

The molecular weight of the long-chain polyol is herein a number-average molecular weight in terms of standard polystyrene as measured by gel permeation chromatography (GPC).

The long-chain polyol contained in the polyurethane resin is not particularly limited with respect to the type thereof, and examples thereof include a polyether-based polyol and a polyester-based polyol, and a polyether-based polyol is preferable from the viewpoint that the interlayer film is inhibited from being hydrolyzed and is enhanced in moist heat resistance.

Examples of the polyether-based polyol include polyethylene ether glycol, polypropylene ether glycol, polytetramethylene ether glycol, and polyhexamethylene ether glycol. In particular, polytetramethylene ether glycol is preferable.

Examples of the polyester-based polyol include a compound obtained by a condensation reaction of a polyhydric alcohol and a dibasic acid.

Examples of the polyhydric alcohol include ethylene glycol, propylene glycol, butanediol, butenediol, hexanediol, pentanediol, neopentyl diol, and pentanediol.

Examples of the dibasic acid include adipic acid, sebacic acid, azelaic acid, terephthalic acid, isophthalic acid, maleic acid, and aromatic carboxylic acid.

### <Isocyanate component>

The isocyanate component contained in the polyurethane resin is not particularly limited, and examples thereof include aliphatic isocyanate, alicyclic isocyanate, and aromatic isocyanate.

Examples of the aliphatic isocyanate include hexamethylene diisocyanate, tetramethylene diisocyanate, dodecamethylene diisocyanate, and 2,4,4-trimethyl-1,6-hexane diisocyanate.

Examples of the alicyclic isocyanate include alicyclic isocyanates each having two or more ring structures, such as dicyclohexylmethane 4,4-diisocyanate and 2,2-bis(4-isocyanatecyclohexyl)methane, and alicyclic isocyanates each having one ring structure, such as 1-methyl-2,4-diisocyanatecyclohexane, (1,4-cyclohexanediyl)bisisocyanate, 1-methyl-2,6-diisocyanatecyclohexane, 1,3-bis(isocyanatomethyl)cyclohexane and isophorone diisocyanate.

Examples of the aromatic isocyanate include toluene diisocyanate, diphenylmethane diisocyanate, polymeric MDI, p-phenylene diisocyanate, and naphthalene diisocyanate.

The polyurethane resin preferably comprises such an aliphatic isocyanate or alicyclic isocyanate, among these isocyanate components, from the viewpoint that an interlayer film excellent in yellowing resistance is obtained.

The polyurethane resin preferably comprises such an alicyclic isocyanate from the viewpoint that an interlayer film easily suppressed in warpage is obtained, and more preferably comprises such an alicyclic isocyanate having one or two ring structures from the viewpoint that an interlayer film more effectively suppressed in warpage is obtained.

Among the above-mentioned alicyclic isocyanates each having one or two ring structures, dicyclohexylmethane 4,4-diisocyanate, 1,3-bis(isocyanatomethyl)cyclohexane, isophorone diisocyanate, and the like are preferable.

In a case where the interlayer film comprises the single resin layer, the resin layer preferably comprises the polyurethane resin, as described above. The polyurethane resin preferably comprises an alicyclic isocyanate having one or two ring structures and more preferably comprises an alicyclic isocyanate having one ring structure from the viewpoint of a reduction in shear storage elastic modulus at 30°C.

Among the above-mentioned alicyclic isocyanates each having one or two ring structures, dicyclohexylmethane 4,4-diisocyanate, 1,3-bis(isocyanatomethyl)cyclohexane, isophorone diisocyanate, and the like are preferable, and in particular isophorone diisocyanate being an alicyclic isocyanate having one ring structure is preferable.

In a case where the interlayer film has the multilayer structure comprising the first to third resin layers, more preferably the first resin layer being the core layer comprises the acrylic resin and the second resin layer and the third resin layer being each the skin layer each comprise the polyurethane resin, as described above. Such a case is here preferably designed mainly so that the core layer allows the interlayer film to be reduced in shear storage elastic modulus at 30°C to result in suppression of warpage and the skin layers allow the occurrence of any cell in the interlayer film to be suppressed. The skin layers each preferably comprise an isocyanate component selected from the group consisting of alicyclic isocyanates each having a ring structure, and more preferably comprises an isocyanate component selected from the group consisting of alicyclic isocyanates each having one or two ring structures, from such viewpoints. Among these isocyanate components, dicyclohexylmethane 4,4-diisocyanate, 1,3-bis(isocyanatomethyl)cyclohexane, and the like are preferable, and 1,3-bis(isocyanatomethyl)cyclohexane is more preferable.

### <Short-chain diol>

The short-chain diol contained in the polyurethane resin is a diol having a molecular weight of less than 250. Examples of the short-chain diol include a diol having 2 or more and 10 or less carbon atoms. In particular, a diol having 4 or more and 10 or less carbon atoms is preferable, and a diol having 4 or more and 6 or less carbon atoms is more preferable, from the viewpoint that an interlayer film easily suppressed in warpage is obtained. The short-chain diol is preferably a saturated aliphatic diol.

Specific examples of the short-chain diol can include ethylene glycol, 1,3-propanediol, 1,2-propanediol, 1,4-butanediol, 1,3-butanediol, 2-methyl-1,3-propanediol, 1,5-pentanediol, neopentyl glycol, 1,6-hexanediol, 3-methyl-1,5-pentanediol, 1,7-heptanediol, 1,8-octanediol, 1,2-octanediol, 2-ethyl-1,3-hexanediol, 1,9-nonanediol, 1,10-decanediol, 1,2-cyclohexanediol, 1,4-cyclohexanediol, and 1,4-cyclohexanedimethanol. In particular, ethylene glycol, 1,4-butanediol, and 1,6-hexanediol are preferable.

The hard segment mass ratio (%) in the thermoplastic polyurethane resin can be determined by 100 × (C + D + F)/(C + D + E) with the mass C of the isocyanate, the mass D of the short-chain diol, the mass E of the long-chain polyol, and the mass F of the hydroxyl group of the long-chain polyol. The hard segment mass ratio of the thermoplastic polyurethane resin is preferably 30% or more and 55% or less, more preferably 35% or more and 52% or less, further preferably 38% or more and 50% or less. In a case where the hard segment mass ratio is equal to or less than the upper limit value, the proportion of the hard segment in the polyurethane resin is reduced to easily result in a reduction in shear storage elastic modulus at 30°C and easy suppression of warpage. In a case where the hard segment mass ratio is equal to or more than the lower limit value, handleability of the interlayer film is improved.

In calculation of the hard segment mass ratio, the composition of the polyurethane resin can be analyzed with, for example, pyrolysis gas chromatography, NMR, and/or FT-IR, and then the mass of the isocyanate, the mass of the long-chain polyol, the mass of the short-chain diol and the mass of the hydroxyl group of the long-chain polyol can be quantitatively determined. The hard segment mass ratio can be calculated based on the composition by use of the above expression.

The polyurethane resin may be any of one produced by a prepolymer method or one produced by a one-shot method, and is preferably one produced by a prepolymer method. Use of a polyurethane resin produced by a prepolymer method allows the shear storage elastic modulus at 30°C of the interlayer film to be easily adjusted at a low value and allows the occurrence of warpage to be easily suppressed.

The prepolymer method is here a method for producing the polyurethane resin by a reaction of the long-chain polyol and the isocyanate in advance for production of an isocyanate group-containing prepolymer and a reaction of the prepolymer and the short-chain diol. The one shot method is here a method for producing the polyurethane resin by a simultaneous reaction of the long-chain polyol, the isocyanate and the short-chain diol.

Such production of the polyurethane resin is preferably performed in the presence of a polyurethane production catalyst. The type of the polyurethane production catalyst is not particularly limited, and a conventionally known catalyst system can be suitably used. Specific examples include tin-based, lead-based, iron-based, and titanium-based organometallic compounds, and an amine-based compound.

### (Acrylic resin)

The acrylic resin for use in the present invention is an acrylic polymer. The acrylic polymer is a homopolymer of an acrylic monomer having a (meth)acryloyl group in its molecule, or a copolymer comprising the acrylic monomer as a monomer unit.

In a case where the acrylic resin is used, the shear storage elastic modulus at 30°C can be appropriately adjusted by appropriately selecting the type of the acrylic monomer.

Herein, the "(meth)acryloyl group" means an acryloyl group or a methacryloyl group, the "(meth)acrylate" means acrylate or methacrylate, and much the same is true on other similar terms.

The acrylic monomer forming the acrylic polymer is usually a monofunctional monomer having one (meth)acryloyloxy group. Examples of such an acrylic monomer include alkyl (meth)acrylate, alicyclic structure-containing (meth)acrylate, and aromatic ring-containing (meth)acrylate.

Such a monofunctional acrylic monomer may be a monomer (hereinafter, also referred to as "functional group-containing monomer") having a functional group such as a cyclic ether group, a hydroxyl group, a carboxyl group, an amino group, an amide group, a polyoxyethylene group, or an alkoxy group. Specific examples of the functional group-containing monomer include cyclic ether group-containing (meth)acrylate, hydroxyl group-containing (meth)acrylate, a carboxyl group-containing (meth)acrylic monomer, an amino group-containing acrylic monomer, an amide group-containing acrylic monomer, a polyoxyethylene group-containing acrylic monomer, and an alkoxy-containing monomer, and among these, cyclic ether group-containing (meth)acrylate, hydroxyl group-containing (meth)acrylate, and a carboxy group-containing (meth)acrylic monomer are preferable.

The acrylic monomer may be used singly, and is preferably used in combinations of two or more kinds thereof. When the acrylic monomer is used in combinations of two or more kinds thereof, the shear storage elastic modulus at 30°C of the interlayer film is easily adjusted in a desired range.

Examples of the alkyl (meth)acrylate include an alkyl (meth)acrylate having an alkyl group having 1 to 18 carbon atoms. Specific examples include methyl (meth)acrylate, ethyl (meth)acrylate, n-butyl (meth)acrylate, isobutyl (meth)acrylate, tert-butyl (meth)acrylate, n-pentyl (meth)acrylate, n-hexyl (meth)acrylate, n-octyl (meth)acrylate, isooctyl (meth)acrylate, 2-ethylhexyl (meth)acrylate, isodecyl (meth)acrylate, lauryl (meth)acrylate, myristyl (meth)acrylate, isomyristyl (meth)acrylate, stearyl (meth)acrylate, and isostearyl (meth)acrylate. Among these, an alkyl (meth)acrylate having an alkyl group having 1 to 8 carbon atoms is preferable, and an alkyl acrylate having an alkyl group having 1 to 8 carbon atoms is preferable and an alkyl acrylate having an alkyl group having 4 to 8 carbon atoms is more preferable from the viewpoint that the shear storage elastic modulus at 30°C and the glass transition temperature (Tg) of the interlayer film are easily adjusted in respective desired ranges.

Examples of the alicyclic structure-containing (meth)acrylate include cyclohexyl (meth)acrylate, isobornyl (meth)acrylate, and dicyclopentanyl (meth)acrylate. Examples of the aromatic ring-containing (meth)acrylate include benzyl (meth)acrylate and phenoxyethyl (meth)acrylate. Herein, such alicyclic structure-containing (meth)acrylate and aromatic ring-containing (meth)acrylate are each (meth)acrylate not having the above-mentioned functional group.

Examples of the cyclic ether group-containing (meth)acrylate include one having an epoxy ring, an oxetane ring, a tetrahydrofuran ring, a dioxorane ring, or a dioxane ring. Among these, (meth)acrylate containing an epoxy ring or a dioxorane ring is preferable, and dioxorane ring-containing (meth)acrylate is particularly preferable, from the viewpoint of, for example, adhesion force.

Examples of the epoxy ring-containing (meth)acrylate include glycidyl (meth)acrylate, 2-hydroxyethyl (meth)acrylate glycidyl ether, 3-hydroxypropyl (meth)acrylate glycidyl ether, 4-hydroxybutyl acrylate glycidyl ether, 5-hydroxypentyl (meth)acrylate glycidyl ether, and 6-hydroxyhexyl (meth)acrylate glycidyl ether. Examples of the tetrahydrofuran ring-containing (meth)acrylate include tetrahydrofurfuryl (meth)acrylate, and a multimer ester of tetrahydrofurfuryl alcohol and acrylic acid.

Examples of the dioxorane ring-containing (meth)acrylate include (2-methyl-2-ethyl-1,3-dioxoran-4-yl)methyl (meth)acrylate, (2,2-cyclohexyl-1,3-dioxoran-4-yl)methyl (meth)acrylate, (2,2-dimethyl-1,3-dioxoran-4-yl)methyl (meth)acrylate, and (2-methyl-2-isobutyl-1,3-dioxoran-4-yl)methyl (meth) acrylate.

Suitable specific examples of the cyclic ether group-containing (meth)acrylate include glycidyl (meth)acrylate and (2-methyl-2-ethyl-1,3-dioxoran-4-yl)methyl (meth)acrylate, and (2-methyl-2-ethyl-1,3-dioxoran-4-yl)methyl (meth)acrylate is more preferable.

Examples of the carboxyl group-containing (meth)acrylic monomer include acrylic acid, methacrylic acid, ω-carboxy-polycaprolactone mono(meth)acrylate, β-carboxyethyl (meth)acrylate, 2-(meth)acryloyloxyethyl phthalic acid (for example, CAS: 30697-40-6), and 2-(meth)acryloyloxyethyl hexahydrophthalic acid (for example, CAS: 57043-35-3). The number of repeating units of polycaprolactone in ω-carboxy-polycaprolactone mono(meth)acrylate is about 2 to 5, preferably 2 to 3. The carboxyl group-containing acrylic monomer is preferably ω-carboxy-polycaprolactone mono(meth)acrylate.

Examples of the hydroxyl group-containing acrylic monomer include 2-hydroxyethyl (meth)acrylate, 3-hydroxypropyl (meth)acrylate, and 4-hydroxybutyl (meth)acrylate.

Examples of the amino group-containing acrylic monomer include N,N-dimethylaminoethyl (meth)acrylate, N,N-dimethylaminoethyl(meth) methacrylate, and N,N-diethylaminoethyl (meth)acrylate.

Examples of the amide group-containing monomer include N,N-dimethyl(meth)acrylamide, N-isopropyl(meth)acrylamide, N,N-diethyl(meth)acrylamide, and N-hydroxyethyl(meth)acrylamide.

Examples of the polyoxyethylene-containing (meth)acrylate include diethylene glycol monoethyl ether (meth)acrylate.

Examples of the alkoxy-containing monomer include 3-methoxybutyl (meth)acrylate.

A polyfunctional acrylic monomer may also be used, in addition to the monofunctional acrylic monomer, in the acrylic monomer forming the acrylic polymer. Examples of the polyfunctional acrylic monomer include polyfunctional (meth)acrylate.

Examples of the polyfunctional (meth)acrylate include 2,2-bis[4-(meth)acryloxyethoxyphenyl]propane di(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tri(2-(meth)acryloyloxyethyl)phosphate, tetramethylolmethane tri(meth)acrylate, tetramethylolpropane tetra(meth)acrylate, ethylene glycol di(meth)acrylate, diethylene glycol di(meth)acrylate, tetraethylene glycol di(meth)acrylate, 1,6-hexanediol di(meth)acrylate, 1,9-nonanediol di(meth)acrylate, polytetramethylene glycol di(meth)acrylate, neopentyl glycol di(meth)acrylate, and 1,3-butylene glycol di(meth)acrylate.

The monomer forming the acrylic polymer preferably comprises one or more selected from the group consisting of alkyl (meth)acrylate, alicyclic structure-containing (meth)acrylate, and aromatic ring-containing (meth)acrylate. The total content of such one or more monomers selected therefrom is preferably 20% by mass or more, more preferably 30% by mass or more, further preferably 50% by mass or more, and preferably 90% by mass or less, more preferably 80% by mass or less based on the total amount of the entire monomer.

A vinyl monomer other than the acrylic monomer may be used in combination with the above-mentioned acrylic monomer having a (meth)acryloyl group in its molecule, in the monomer forming the acrylic polymer. The acrylic polymer may be obtained by polymerization such as a solution polymerization method or a suspension polymerization method, and is preferably obtained by polymerization due to irradiation with active energy ray.

### (Polyvinyl acetal resin)

The polyvinyl acetal resin is obtained by acetalization of polyvinyl alcohol with aldehyde. The polyvinyl alcohol is obtained by, for example, saponification of polyvinyl ester such as polyvinyl acetate. The polyvinyl acetal resin may be used singly or in combinations of two or more kinds thereof.

The polyvinyl alcohol here generally used is a polyvinyl alcohol having a degree of saponification of 80 to 99.8% by mol. The average degree of polymerization of the polyvinyl alcohol is preferably 150 or more and 1500 or less in order to adjust the average degree of polymerization of the polyvinyl acetal resin in a desired range. The average degree of polymerization of the polyvinyl alcohol is determined by a method according to JIS K6726 "polyvinyl alcohol test method".

The number of carbon atoms in the acetal group contained in the polyvinyl acetal resin is not particularly limited, and is preferably 1 to 10, more preferably 2 to 6, further preferably 4. The acetal group is specifically particularly preferably a butyral group, and therefore the polyvinyl acetal resin is preferably a polyvinyl butyral resin. The degree of acetalization of the polyvinyl acetal resin is preferably 40% by mol or more, and preferably 85% by mol or less. The degree of acetalization is more preferably 60% by mol or more, and more preferably 75% by mol or less. When the degree of acetalization is in such a range, the amount of the hydroxyl group is easily adjusted in a desired range described below. The degree of acetalization herein means the degree of acetoacetalization in a case where the acetal group of the polyvinyl acetal resin is an acetoacetal group, and means the degree of butyralization in a case where the acetal group of the polyvinyl acetal resin is a butyral group.

The amount of the hydroxyl group in the polyvinyl acetal resin is preferably 15% by mol or more, and preferably 35% by mol or less. When the amount of the hydroxyl group is 15% by mol or more, the interlayer film is improved in adhesiveness to a glass plate. When the amount of the hydroxyl group is 35% by mol or less, the occurrence of warpage in the laminated glass is easily suppressed.

The amount of the hydroxyl group in the polyvinyl acetal resin is more preferably 20% by mol or more, further preferably 25% by mol or more, and more preferably 33% by mol or less from such viewpoints.

The degree of acetylation (the amount of the acetyl group) in the polyvinyl acetal resin is preferably 0.1% by mol or more, and preferably 20% by mol or less. When the degree of acetylation is equal to or more than the lower limit value, the occurrence of warpage in the laminated glass is easily suppressed, and compatibility with other resin such as the acrylic resin is easily improved. When the degree of acetylation is equal to or less than the upper limit value, the interlayer film is increased in moisture resistance. The degree of acetylation is more preferably 0.3% by mol or more, further preferably 0.5% by mol or more, and more preferably 10% by mol or less, further preferably 5% by mol or less, still further preferably 3% by mol or less from such viewpoints.

The amount of the hydroxyl group, the degree of acetalization (degree of butyralization) and the degree of acetylation can be each calculated from the results measured by a method according to JIS K6728 "polyvinyl butyral test method".

The average degree of polymerization in the polyvinyl acetal resin is preferably 100 or more and 1500 or less.

The average degree of polymerization in the polyvinyl acetal resin is the same as the average degree of polymerization of the polyvinyl alcohol serving as a raw material, and can be determined by the average degree of polymerization of the polyvinyl alcohol.

The aldehyde for use in production of the polyvinyl acetal resin is not particularly limited, and an aldehyde having 1 to 10 carbon atoms carbon atoms is generally suitably used. The aldehyde having 1 to 10 carbon atoms is not particularly limited, and examples thereof include formaldehyde, acetaldehyde, propionaldehyde, n-butylaldehyde, isobutylaldehyde, n-valeraldehyde, 2-ethylbutylaldehyde, n-hexylaldehyde, n-octylaldehyde, n-nonylaldehyde, n-decylaldehyde, and benzaldehyde. In particular, aldehydes each having 2 to 6 carbon atoms, such as acetaldehyde, n-butylaldehyde, n-hexylaldehyde and n-valeraldehyde are preferable, and n-butylaldehyde is more preferable.

The aldehyde may be used singly or in combinations of two or more kinds thereof.

### (Ethylene-vinyl acetate copolymer resin)

The ethylene-vinyl acetate copolymer resin may be a non-crosslinking type ethylene-vinyl acetate copolymer resin or may be a high-temperature crosslinking type ethylene-vinyl acetate copolymer resin. The ethylene-vinyl acetate copolymer resin here used can also be an ethylene-vinyl acetate modified resin like a saponificated product of an ethylene-vinyl acetate copolymer or a hydrolyzed product of ethylene-vinyl acetate.

The content of vinyl acetate in the ethylene-vinyl acetate copolymer resin, as measured according to JIS K 6730 "ethylene-vinyl acetate resin test method, is preferably 10 to 50% by mass, more preferably 20 to 45% by mass. When the content of vinyl acetate is equal to or more than the lower limit value, the occurrence of warpage in the laminated glass is easily suppressed. Additionally, when the content of vinyl acetate is equal to or more than the lower limit value, an increase in adhesion force is achieved and the laminated glass is easily improved in penetration resistance. When the content of vinyl acetate is equal to or less than the upper limit value, the interlayer film for laminated glass is increased in fracture strength and the laminated glass is improved in impact resistance.

In a case where the polyvinyl acetal resin and the ethylene-vinyl acetate copolymer resin are used in the thermoplastic resin, for example, the polyvinyl acetal resin or the ethylene-vinyl acetate copolymer resin may be contained in the first resin layer of the multilayer structure comprising the first to third resin layers.

In a case where the polyvinyl acetal resin or the ethylene-vinyl acetate copolymer resin is used in the first resin layer, the polyurethane resin is preferably used in the second and third resin layers, as described above.

In a case where the polyvinyl acetal resin is used in the first resin layer, for example, the shear storage elastic modulus is easily reduced by allowing a large amount of a plasticizer to be contained in the first resin layer.

### (Plasticizer)

The interlayer film may comprise a plasticizer. The interlayer film, which comprises a plasticizer, thus is flexible and can also be increased in adhesiveness to glass and the like. It is noted that the interlayer film of the present invention preferably comprises no plasticizer, or preferably comprises a small amount of a plasticizer even when comprises it. When only a small amount of a plasticizer or no plasticizer is contained, a failure, for example, the occurrence of clouding of organic glass due to transfer of the plasticizer from the interlayer film to the organic glass, can be prevented.

In the present invention, the interlayer film not only can be flexible, but also can be excellent in adhesion force, by appropriately selecting the thermoplastic resin, for example, the polyurethane resin and the acrylic resin, as described above, even if a small amount of a plasticizer or no plasticizer is contained.

The content of the plasticizer in the interlayer film is, for example, 0 parts by mass or more and less than 10 parts by mass, preferably 5 parts by mass or less, more preferably 3 parts by mass or less, further preferably 1 part by mass or less, most preferably 0 parts by mass based on 100 parts by mass of the resin contained in the entire interlayer film. In other words, the interlayer film most preferably comprises no plasticizer.

In a case where the interlayer film has a multilayer structure (namely, has a plurality of resin layers), some of the resin layers may comprise a plasticizer and other thereof may comprise no plasticizer. The contents of the plasticizers in the resin layers may be different from each other.

For example, in a case where the interlayer film comprises the first, second, and third resin layers, the content of the plasticizer based on 100 parts by mass of the resin in the first resin layer may be higher than the content of the plasticizer based on 100 parts by mass of each of the resins in the second and third resin layers. Alternatively, only the first resin layer may comprise the plasticizer and the second and third resin layers may comprise no plasticizer. According to such a configuration, the second and third resin layers (skin layers) are present to thereby hardly cause the plasticizer to be transferred to a surface of the interlayer film and thus hardly cause clouding of organic glass to occur, even when the first resin layer (core layer) comprises a relatively large amount of the plasticizer.

Examples of the plasticizer include organic ester plasticizers, and phosphorus plasticizers such as an organic phosphate plasticizer and an organic phosphite plasticizer. The plasticizer may be used singly or in combinations of two or more kinds thereof. In particular, an organic ester plasticizer is preferable. Examples of the organic ester plasticizer include a monobasic organic acid ester and a polybasic organic acid ester.

Examples of the monobasic organic acid ester include an ester of a glycol and a monobasic organic acid. Examples of the glycol include a polyalkylene glycol in which each alkylene unit has 2 to 4 carbon atoms, preferably 2 or 3 carbon atoms, and the number of repeating units of alkylene is 2 to 10, preferably 2 to 4. The glycol may be a monoalkylene glycol (namely, the number of repeating units is 1) having 2 to 4 carbon atoms, preferably 2 or 3 carbon atoms.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having 3 to 10 carbon atoms, and specific examples thereof include butyric acid, isobutyric acid, caproic acid, 2-ethylbutyric acid, heptanoic acid, n-octanoic acid, 2-ethylhexanoic acid, n-nonylic acid, and decylic acid.

Specific examples of the monobasic organic acid include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapryate, triethylene glycol di-n-heptanoate, tetraethylene glycol di-n-heptanoate, triethylene glycol di-2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, and 1,2-butylene glycol di-2-ethylbutyrate.

Examples of the polybasic organic acid ester include an ester compound of a dibasic organic acid having 4 to 12 carbon atoms, such as adipic acid, sebacic acid or azelaic acid, and an alcohol having 4 to 10 carbon atoms. Such an alcohol having 4 to 10 carbon atoms may be straight, may have a branched structure, or may have a cyclic structure.

Specific examples include dibutyl sebacate, dioctyl azelate, dihexyl adipate, dioctyl adipate, hexyl cyclohexyl adipate, diisononyl adipate, heptylnonyl adipate, dibutyl carbitol adipate, and a mixed adipic acid ester. An oil-modified sebacic alkyd may also be adopted. Examples of the mixed adipic acid ester include an adipic acid ester produced from two or more alcohols selected from the group consisting of alkyl alcohols each having 4 to 9 carbon atoms and cyclic alcohols each having 4 to 9 carbon atoms.

Examples of the organic phosphoric acid plasticizer include phosphoric acid esters such as tributoxyethyl phosphate, isodecylphenyl phosphate and triisopropyl phosphate.

Among the above-mentioned plasticizers, triethylene glycol-di-2-ethylhexanoate (3GO) is particularly suitably used as the plasticizer.

### (Photo-polymerization initiator)

In a case where the interlayer film of the present invention comprises a resin cured by active energy ray, a photo-polymerization initiator is preferably compounded. Examples of the photo-polymerization initiator include benzophenone-based compounds, acetophenone-based compounds such as α-aminoalkylphenone and α-hydroxyalkylphenone, acyl phosphine oxide-based compounds, titanocene-based compounds, oxime ester-based compounds, benzoin ether-based compounds, and thioxanthone. Among these, an acetophenone-based compound is preferable.

Examples of a commercially available product, among the above-mentioned photo radial polymerization initiators, include IRGACURE 184, IRGACURE 369, IRGACURE 379, IRGACURE 379EG, IRGACURE 651, IRGACURE 784, IRGACURE 819, IRGACURE 907, IRGACURE 2959, IRGACURE OXE01 and Lucirin TPO (all are manufactured by BASF SE), and benzoin methyl ether, benzoin ethyl ether and benzoin isopropyl ether (all are manufactured by Tokyo Chemical Industry Co., Ltd.).

The photo-polymerization initiator may be used singly or in combinations of two or more kinds thereof.

The photo-polymerization initiator may be compounded in a resin layer comprising a resin polymerized with active energy ray.

The amount of the photo-polymerization initiator compounded in the interlayer film, with respect to each of the layers, is preferably 0.1 parts by mass or more and 10 parts by mass or less, more preferably 0.5 parts by mass or more and 5 parts by mass or less based on 100 parts by mass of the resin polymerized with active energy ray. When the amount of the photo-polymerization initiator compounded is equal to or more than the lower limit value, photo-curing properties of the resin are improved. When the amount is equal to or less than the upper limit value, photo-curing properties corresponding to the amount of compounding can be exhibited.

For example, in a case where the acrylic resin is used as the thermoplastic resin and subjected to polymerization with active energy ray, the photo-polymerization initiator may be compounded in a layer comprising the acrylic resin, and thus the photo-polymerization initiator is preferably compounded in the first resin layer in the case of the multilayer structure comprising the first to third resin layers.

### (Other additive(s))

Various additives may be compounded in the interlayer film. Specific examples include an ultraviolet absorbing agent, an infrared absorbing agent, an antioxidant, a light stabilizer, an adhesion force modifier, a pigment, a dye, a fluorescent brightener, and a crystal nucleating agent. In a case where the interlayer film has the multilayer structure, the types and the amounts of compounding of such additives may be each different with respect to each of the layers, or the same in all the layers.

### (Method for producing interlayer film)

In the case of the interlayer film of the monolayer structure, a single resin layer may be produced in the method for producing the interlayer film. In the case of the interlayer film of the multilayer structure, each of resin layers for forming the multilayer structure may be individually produced and the resin layers may be laminated, or each of resin layers for forming the multilayer structure may be co-extruded by a multilayer extruder.

Each of these resin layers may be produced by extrusion, press forming, or the like of a mixture of the thermoplastic resin and additive(s), if necessary, compounded, or may be produced as a resin layer comprising the thermoplastic resin, obtained by polymerization of a monomer, for example, on a release film.

### [Inorganic glass]

The inorganic glass for use in the present invention is one comprising an inorganic glass plate and is not particularly limited, and examples thereof include float plate glass, reinforced glass, colored glass, polished plate glass, template glass, wire plate glass, lined plate glass, ultraviolet absorbing plate glass, infrared reflection plate glass, infrared absorbing plate glass, and green glass. The inorganic glass may be, for example, surface-treated.

The thickness of the inorganic glass is not particularly limited, and is preferably 0.1 mm or more, further preferably 1.0 mm or more, and preferably 5.0 mm or less, further preferably 3.2 mm or less.

The coefficient of linear expansion of the inorganic glass is not particularly limited, and is preferably 6.0 × 10⁻⁶ K⁻¹ or more, more preferably 8.0 × 10⁻⁶ K⁻¹ or more, and preferably 1.5 × 10⁻⁵ K⁻¹ or less, more preferably 9.5 × 10⁻⁶ K⁻¹ or less. The coefficient of linear expansion of the inorganic glass can be measured according to JISR 3102.

### [Organic glass]

The organic glass for use in the present invention is one comprising an organic glass plate and is not particularly limited, and examples thereof include a polycarbonate plate, a polymethyl methacrylate plate, an acrylonitrile-styrene copolymer plate, an acrylonitrile-butadiene-styrene copolymer plate, a polyester plate, a fluororesin plate, a polyvinyl chloride plate, a chlorinated polyvinyl chloride plate, a polypropylene plate, a polystyrene plate, a polysulfone plate, an epoxy resin plate, a phenol resin plate, an unsaturated polyester resin plate, and a polyimide resin plate. The organic glass may be, for example, appropriately surface-treated.

Among those described above, a polycarbonate plate is preferable from the viewpoint of being excellent in transparency, impact resistance and burning resistance, a polymethyl methacrylate plate is preferable from the viewpoint of being high in transparency and excellent in weather resistance and mechanical strength, and in particular, a polycarbonate plate is preferable.

A specific thickness of the organic glass is not particularly limited, and is preferably 0.1 mm or more, further preferably 0.3 mm or more, and preferably 5.0 mm or less, further preferably 3.0 mm or less.

The coefficient of linear expansion of the organic glass is generally larger than the coefficient of linear expansion of the inorganic glass. A specific coefficient of linear expansion of the organic glass is not particularly limited, and is preferably 1.5 × 10⁻⁵ K⁻¹ or more, more preferably 2.0 × 10⁻⁵ K⁻¹ or more, and preferably 1.2 × 10⁻⁴ K⁻¹ or less, more preferably 8.0 × 10⁻⁵ K⁻¹ or less. The coefficient of linear expansion of the organic glass can be measured according to, for example, JIS K 7197.

### [Laminated glass]

The laminated glass of the present invention comprises the interlayer film and a pair of glass members laminated with the interlayer film being interposed. Preferably, one glass member of the pair of glass members is inorganic glass and other glass member thereof is organic glass. The interlayer film, the inorganic glass and the organic glass for use in the laminated glass of the present invention are as described above, and the descriptions thereof are omitted.

The laminated glass of the present invention can be used in various fields. Specifically, the laminated glass is used in window glass for, for example, conveyances, for example, vehicles such as automobiles and trains, and marine vessels and airplanes, or various architectural structures such as buildings, condominium buildings, detached houses, halls, and gymnastic halls.

### (Method for producing laminated glass)

The laminated glass of the present invention may be produced by placing the interlayer film between the inorganic glass and the organic glass, and thereafter subjecting them to thermocompression bonding. The method for placing the interlayer film between the inorganic glass and the organic glass is not particularly limited, and, for example, the interlayer film produced in advance may be sandwiched between the inorganic glass and the organic glass. In a case where the interlayer film has a multilayer structure, a plurality of resin layers separately prepared may be stacked between the inorganic glass and the organic glass and thereafter these may be subjected to thermocompression bonding.

Any air remaining between the inorganic glass and the organic glass may be, if necessary, subjected to degassing after placing the interlayer film or the plurality of resin layers between the inorganic glass and the organic glass and before thermocompression bonding. The method for degassing is not particularly limited, and may be performed by passing through a pressing roll or charging into a rubber bag and evacuating under reduced pressure.

Temporary adhesion may be performed before thermocompression bonding. The temporary adhesion may be performed by, for example, pressing the inorganic glass and the organic glass with the interlayer film or the plurality of resin layers being placed therebetween at a relatively low pressure with, if necessary, heating. The temporary adhesion may be performed with, for example, a vacuum laminator. The temporary adhesion may be performed after degassing or together with degassing in a case where degassing is performed.

The method for thermocompression bonding is not particularly limited, and pressure may be applied in the state of heating of the interlayer film or the plurality of resin layers placed between the inorganic glass and the organic glass. The heating temperature is preferably 60°C or more and 150°C or less, more preferably 70°C or more and 120°C or less. The pressure is preferably 0.4 MPa or more and 1.5 MPa or less, more preferably 0.5 MPa or more and 1.3 MPa or less. Examples of the thermocompression bonding include a method with an autoclave and a method by hot pressing, and a method with an autoclave is preferable. Although the thermocompression bonding, if performed with an autoclave or the like, easily causes the occurrence of warpage on the laminated glass in cooling after thermocompression bonding, such warpage is suppressed by using the above-mentioned interlayer film in the present invention.

### Examples

The present invention will be described in more detail with reference to Examples, but the present invention is not limited to these Examples at all.

The measurement methods and the evaluation methods of physical properties are as follows.

### [Shear storage elastic modulus at 30°C]

The interlayer film was cut out to a size of a length of 10 mm and a width of 5 mm, and viscoelasticity measurement was performed with a dynamic viscoelasticity measurement apparatus (trade name "DVA-200" manufactured by IT Keisoku Seigyo Co., Ltd.) to measure the shear storage elastic modulus at 30°C. Measurement conditions were as follows.

### (Measurement conditions)

Deformation mode: shear mode, measurement temperature: -50°C to 200°C, rate of temperature rise: 5°C/min, measurement frequency: 1 Hz, strain: 1%

### [Glass transition temperature (Tg)]

The peak temperature at a loss tangent tanδ obtained from results of the same viscoelasticity measurement as in the shear storage elastic modulus at 30°C was read. A first peak temperature at the lower temperature side in a temperature region from -50 to 150°C was defined as the glass transition temperature (Tg).

### [Evaluation of amount of warpage]

A SUS plate having a size of 25 mm × 305 mm and a thickness of 2 mm was stacked on a glass surface of each laminated glass sample immediately after an autoclave treatment, obtained in Examples and Comparative Examples, a portion of the resultant, located at 35 mm from an end, was sandwiched by a clamp and thus fixed, a space between the laminated glass sample and the SUS plate, at a position of 270 mm apart from the clamp, was measured as warpage, and the amount of warpage was evaluated by the following criteria. The amount of warpage was here measured at 23°C and 10°C, and each value thereof, expressed to the tenths place as a significant figure, was evaluated.
S: less than 1 mm
A: 1 mm or more and less than 3 mm
B: 3 mm or more and less than 5 mm
C: 5 mm or more, or cracking observed

### [Clouding]

Each laminated glass sample obtained in Examples and Comparative Examples was visually evaluated with respect to clouding of the organic glass.
A: no clouding
C: clouding

### [Foaming]

Each laminated glass sample obtained in Examples and Comparative Examples was retained under an environment at -40°C for 6 hours according to a temperature dependence test of JIS R3211, and thereafter left to still stand under an environment at 23°C until the temperature of such each sample was 23°C. Next, such each sample was left to still stand under an environment at 72°C for 3 hours and thereafter further left to still stand under an environment at 23°C for 1 hour, and the presence of foaming was observed. When foaming was observed, the number of cells was counted.
A: no foaming
B: foaming observed, with less than 10 cells
C: foaming observed, with 10 or more cells

Each component used in Examples and Comparative Examples is as follows.

### <Component forming acrylic resin (acrylic monomer)>

4-HBA: 4-hydroxybutyl acrylate, manufactured by Osaka Organic Chemical Industry Ltd.
2-EHA: 2-ethylhexyl acrylate, manufactured by Nippon Shokubai Co., Ltd.
IBOA: isobornyl acrylate, manufactured by Nippon Shokubai Co., Ltd.
BzA: benzyl acrylate, manufactured by Osaka Organic Chemical Industry Ltd.
CHA: cyclohexyl acrylate, manufactured by Osaka Organic Chemical Industry Ltd.

### <Component forming polyurethane resin>

1. A polyurethane resin was synthesized using the following three components.
   (Isocyanate component)
      Dicyclohexylmethane 4,4-diisocyanate (H12MDI) manufactured by Tokyo Chemical Industry Co., Ltd.
      1,3-Bis(isocyanatomethyl)cyclohexane (H6XDI) manufactured by Tokyo Chemical Industry Co., Ltd.
      Isophorone diisocyanate (IPDI) manufactured by Tokyo Chemical Industry Co., Ltd.
   (Long-chain polyol component)
      Polytetramethylene ether glycol (PTMEG650) manufactured by Mitsubishi Chemical Corporation, number-average molecular weight 650
      Polytetramethylene ether glycol (PTMEG1000) manufactured by Mitsubishi Chemical Corporation, number-average molecular weight 1000
   (Short-chain diol component)
      Ethylene glycol (EG) manufactured by Tokyo Chemical Industry Co., Ltd.
      1,4-Butanediol (1,4-BD) manufactured by Tokyo Chemical Industry Co., Ltd.
      1,6-Hexanediol (1,6-HD) manufactured by Tokyo Chemical Industry Co., Ltd.
2. The following commercially available product was used
   Polyurethane resin (AG8451), reaction product of aliphatic isocyanate and polyether polyol (PTMEG), manufactured by Lubrizol Corporation

### [Preparation of resin layer]

### (1) Production of acrylic resin (Acr 1)

(i) Each acrylic monomer shown in Table 1 and 2.0 parts by mass of a photo-polymerization initiator based on 100 parts by mass of such each acrylic monomer were mixed, to thereby obtain a curable resin material. The photo-polymerization initiator here used was trade name "Irgacure184", manufactured by Ciba Specialty Chemicals.
(ii) A PET release film (trade name "PET50D1-C", manufactured by Nippa Co., Ltd.) was tightly attached to an upper surface of glass coated, by ethyl acetate so that a release treatment surface thereof faced upward. The release treatment surface of the PET release film was coated with the curable resin material obtained above, and thereafter a spacer was placed on each of two sides located at ends of the PET release film so that a cured product could have a predetermined thickness. Ultraviolet transmitting glass having the same size as that of the glass coated was prepared, and such a PET release film was also tightly attached onto the ultraviolet transmitting glass by ethyl acetate so that a release treatment surface thereof was exposed. The curable resin material was covered with the ultraviolet transmitting glass so that the curable resin material and the spacers were sandwiched between the glass coated and the ultraviolet transmitting glass and also the release treatment surface of the PET release film faced inward. Thereafter, the ultraviolet transmitting glass was irradiated with ultraviolet light by use of an ultraviolet irradiation machine so that the illuminance was 3 mW/cm² and the irradiance level was 900 mJ/cm², to thereby cure the curable resin material, thereby obtaining a resin layer comprising an acrylic resin (Acr 1).

### (2) Production of acrylic resins (Acrs 2 to 3)

A resin layer comprising an acrylic resin (Acr 2) and a resin layer comprising an acrylic resin (Acr 3) were each produced by the same method as in the acrylic resin (Acr 1) except that compounding of each acrylic monomer was changed as in Table 1.

### (3) Production of polyurethane resin (TPU 1)

Dicyclohexylmethane 4,4-diisocyanate as the isocyanate component, polytetramethylene ether glycol ("PTMG650" manufactured by Mitsubishi Chemical Corporation, number-average molecular weight 650) as the long-chain polyol component, ethylene glycol as the short-chain diol, and triethylenediamine (manufactured by Tokyo Chemical Industry Co., Ltd.) as a catalyst were used. These were used, to thereby obtain a polyurethane resin (TPU1) having a composition shown in Table 2, according to a prepolymer method. The polyurethane resin obtained was formed into a resin layer by extrusion, and the layer was used in Examples and Comparative Examples.

### (4) Production of polyurethane resins (TPUs 2 to 4, 6)

Each polyurethane resin (TPUs 2 to 4, 6) having a composition shown in Table 2 was obtained in the same manner as in production of the polyurethane resin (TPU 1) except that the types of the isocyanate component, the long-chain polyol component and the short-chain diol component were changed as in Table 2.

Each of the polyurethane resins obtained was formed into a resin layer by extrusion, and the layer was used in Examples and Comparative Examples.

### (5) Polyurethane resin (TPU 5)

A polyurethane resin ("AG8451" manufactured by Lubrizol Corporation) was used.

The polyurethane resin was formed into a resin layer by extrusion, and the layer was used in Comparative Examples.

### (6) Polyvinyl butyral resins (PVBs 1 to 2)

PVBs 1 to 2 shown in Table 3 were used.

Such each polyvinyl butyral resin was mixed with a plasticizer (triethylene glycol di-2-ethylhexanoate: 3GO) shown in Table 4, the mixture was formed into a resin layer by extrusion, and the layer was used in Comparative Examples. Herein, the content of the plasticizer shown in Table 4 is a value based on 100 parts by mass of such each polyvinyl butyral resin.

**Table 1**

| | | Acr1 | Acr2 | Acr3 |
|---|---|---|---|---|
| Acrylic monomer (parts by mass) | 4-Hydroxybutyl acrylate (4-HBA) | 40.0 | 13.93 | - |
| | 2-Ethylhexyl acrylate (2-EHA) | 38.6 | 62.01 | - |
| | Isobornyl acrylate (IBOA) | 5.8 | - | - |
| | Benzyl acrylate (BzA) | 15.6 | 24.06 | - |
| | Cyclohexyl acrylate (CHA) | - | - | 100 |

**Table 2**

| | | | TPU1 | TPU2 | TPU3 | TPU4 | TPU5 | TPU6 |
|---|---|---|---|---|---|---|---|---|
| Composition (% by mass) of polyurethane resin | Isocyanate com ponent | Dicyclohexylmethane 4,4-diisocyanate (H12MDI) | 35.1 | 36.7 | - | - | Commercially available product [AG8451] | 23.3 |
| | | 1,3-Bis(isocyanatomethyl)cyclohexane (H6XDI) | - | - | 35.9 | - | | - |
| | | Isophorone diisocyanate (IPDI) | - | - | - | 39.0 | | - |
| | | Hexamethylene diisocyanate (HDI) | - | - | - | - | | - |
| | Long-chain polyol com ponent | Polytetramethylene ether glycol (PTMEG 650) | - | - | 55.7 | 52.9 | | - |
| | | Polytetramethylene ether glycol (PTMEG 1000) | 60.7 | 58.6 | - | - | | 76.2 |
| | Short-chain diol com ponent | Ethylene glycol (EG) | 4.2 | 4.7 | - | - | | - |
| | | 1,4-Butanediol (1, 4-BD) | - | - | 8.5 | 8.0 | | 0.5 |
| | | 1,6-Hexanediol (1, 6-HD) | | | | | | |
| Hard segment mass ratio (%)(*1) | | | 41 | 43 | 47 | 47 | 52 | 26 |

| | | | | | | | | |
|---|---|---|---|---|---|---|---|---|
| (*1) Hard segment mass ratio (%) = 100×(C+D+F)/(C+D+E) C: Mass of isocyanate D: Mass of short-chain diol E: Mass of long-chain polyol F: Mass of hydroxyl group of long-chain polyol | | | | | | | | |

**Table 3**

| | PVB1 | PVB2 |
|---|---|---|
| Degree of polymerization | 1700 | 3000 |
| Butyral (mol %) | 68.7 | 64 |
| Hydroxyl group (mol %) | 30.5 | 24 |
| Acetyl (mol %) | 0.8 | 12 |

### [Examples 1 to 6, and Comparative Examples 3, 5 and 7]

Float glass as the inorganic glass and a polycarbonate plate (trade name "Takiron CIC1600", manufactured by Yukata Panel Co., Ltd.) as the organic glass were prepared. The float glass and the polycarbonate plate each had a size of 25 mm × 305 mm, and the float glass had a thickness of 1.8 mm and the polycarbonate plate had a thickness of 2.0 mm.

Each of first to third resin layers shown in Table 4 was cut out to a size of 30 mm × 310 mm, and thereafter the polycarbonate plate, the second resin layer, the first resin layer, the third resin layer and the float glass were stacked in the listed order, temporarily connected with a tape, and subjected to temporary adhesion in conditions of 80°C and 0.1 MPa for 3 minutes in a vacuum laminator (trade name "MVLP500/600", manufactured by Meiki Co., Ltd.). Thereafter, main compression bonding was performed in an autoclave (trade name "HP-5050MAH-H14", manufactured by Kyosin Engineering Corporation) in conditions of 80°C and 0.5 MPa for 1 hour. Thereafter, a portion protruded from the glass was cut off, to provide each laminated glass sample of the Examples and Comparative Examples.

### [Example 7, and Comparative Examples 1 to 2 and 4]

The same float glass and polycarbonate plate as in Example 1 were prepared.

A resin layer shown in Table 4 was cut out to a size of 30 mm × 310 mm, and thereafter the polycarbonate plate, the resin layer and the float glass were stacked in the listed order, temporarily connected with a tape, and subjected to temporary adhesion in conditions of 80°C and 0.1 MPa for 3 minutes in a vacuum laminator (trade name "MVLP500/600", manufactured by Meiki Co., Ltd.). Thereafter, main compression bonding was performed in an autoclave (trade name "HP-5050MAH-H14", manufactured by Kyosin Engineering Corporation) in conditions of 80°C and 0.5 MPa for 1 hour. Thereafter, a portion protruded from the glass was cut off, to provide each laminated glass sample of the Example and Comparative Examples.

### [Comparative Example 6]

The same float glass and polycarbonate plate as in Example 1 were prepared. Each of first to third resin layers shown in Table 4 was cut out to a size of 30 mm × 310 mm, and thereafter the polycarbonate plate, the second resin layer, the fourth resin layer, the first resin layer, the third resin layer and the float glass were stacked in the listed order. After the stacking of them, the resultant was temporarily connected with a tape and subjected to temporary adhesion in conditions of 80°C and 0.1 MPa for 3 minutes in a vacuum laminator (trade name "MVLP500/600", manufactured by Meiki Co., Ltd.). Thereafter, main compression bonding was performed in an autoclave (trade name "HP-5050MAH-H14", manufactured by Kyosin Engineering Corporation) in conditions of 80°C and 0.5 MPa for 1 hour. Thereafter, a portion protruded from the glass was cut off, to provide each laminated glass sample of the Comparative Example.

**Table 4**

| | | Example | | | | | | | Comparative Example | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| Second resin layer | Resin | TPU1 | TPU1 | TPU2 | TPU1 | TPU3 | TPU4 | | | | TPU1 | | PVB1 | TPU5 | TPU2 |
| | 3GO (parts) | | | | | | | | | | | | 40 | | |
| | Thickness (µm) | 350 | 300 | 350 | 350 | 350 | 350 | - | - | - | 350 | - | 330 | 400 | 25 |
| Fourth resin layer | Resin | - | - | - | - | - | - | - | - | - | - | - | - | PVB1 | - |
| | 3GO (parts) | - | - | - | - | - | - | - | - | - | - | - | - | 40 | - |
| | Thickness (µm) | - | - | - | - | - | - | - | - | - | - | - | - | 200 | - |
| First resin layer | Resin | Acr1 | Acr1 | Acr1 | Acr2 | Acr1 | Acr1 | TPU4 | TPU5 | TPU2 | Acr3 | PVB1 | PVB2 | PVB2 | PVB1 |
| | 3GO (parts) | - | - | - | - | - | - | - | - | - | - | 40 | 60 | 60 | 17 |
| | Thickness (µm) | 100 | 200 | 100 | 100 | 100 | 100 | 800 | 800 | 800 | 100 | 800 | 100 | 100 | 1500 |
| Third resin layer | Resin | TPU1 | TPU1 | TPU2 | TPU1 | TPU3 | TPU4 | - | - | - | TPU1 | - | PVB1 | PVB1 | TPU2 |
| | 3GO (parts) | - | - | - | - | - | - | - | - | - | - | - | 40 | 40 | - |
| | Thickness (µm) | 350 | 300 | 350 | 350 | 350 | 350 | - | - | - | 350 | - | 330 | 200 | 25 |
| Glass transition temperature (°C) | | -7.8 | -13.7 | -8.7 | -16 | -14.7 | -14.7 | -7 | 14 | 30 | 8 | 30 | -5 | -2.7 | 39.2 |
| Shear storage elastic modulus (MPa) at 30°C | | 0.4 | 0.2 | 0.5 | 0.2 | 0.4 | 0.4 | 1.1 | 2 | 6 | 2.3 | 2 | 1.6 | 1.8 | 38.6 |
| Warpage (23°C) | | S | S | S | S | S | S | A | C | C | C | C | C | C | C |
| Warpage (10°C) | | A | A | A | S | S | S | B | C | C | C | C | C | C | C |
| Foaming | | A | A | A | A | A | B | B | A | A | A | A | A | A | A |
| Clouding | | A | A | A | A | A | A | A | A | A | A | C | C | A | A |

Each of the interlayer films of Examples 1 to 7 contained a thermoplastic resin and had a shear storage elastic modulus at 30°C of 1.5 MPa or less, and warpage thereof at 23°C and 10°C could be sufficiently suppressed. On the contrary, each of the interlayer films of Comparative Examples 1 to 7 had a shear storage elastic modulus at 30°C of more than 1.5 MPa, and warpage thereof at 23°C and 10°C was found to be large.

### Reference Signs List

10, 20 interlayer film
11 inorganic glass
12 organic glass
21 first resin layer
22 second resin layer
23 third resin layer

## Claims

1. An interlayer film for laminated glass, comprising a thermoplastic resin and having a shear storage elastic modulus at 30°C of 1.5 MPa or less.

2. The interlayer film for laminated glass according to claim 1, having a glass transition temperature of 30°C or less.

3. The interlayer film for laminated glass according to claim 1 or 2, comprising a first resin layer, a second resin layer and a third resin layer, wherein the first resin layer is placed between the second resin layer and the third resin layer.

4. The interlayer film for laminated glass according to claim 3, wherein the first resin layer comprises at least an acrylic resin.

5. The interlayer film for laminated glass according to claim 3 or 4, wherein the second resin layer and the third resin layer each comprise at least a polyurethane resin.

6. The interlayer film for laminated glass according to claim 5, wherein the polyurethane resin comprises an aliphatic or alicyclic isocyanate.

7. The interlayer film for laminated glass according to claim 5 or 6, wherein the polyurethane resin has a hard segment mass ratio of 30% or more and 55% or less.

8. The interlayer film for laminated glass according to any of claims 5 to 7, wherein the polyurethane resin comprises a polyether-based polyol.

9. The interlayer film for laminated glass according to any of claims 3 to 8, wherein the first resin layer has a thickness of 50 µm or more and 500 µm or less, and the second resin layer and the third resin layer each have a thickness of 50 µm or more and 1000 µm or less.

10. The interlayer film for laminated glass according to any of claims 3 to 9, wherein a ratio of the thickness of the second resin layer to the thickness of the first resin layer (thickness of second resin layer/thickness of first resin layer) is 1 or more and 6 or less, and a ratio of the thickness of the third resin layer to the thickness of the first resin layer (thickness of third resin layer/thickness of first resin layer) is 1 or more and 6 or less.

11. The interlayer film for laminated glass according to any of claims 1 to 10, having a thickness of 200 µm or more and 2000 µm or less.

12. The interlayer film for laminated glass according to any of claims 1 to 11, wherein a content of a plasticizer is less than 10 parts by mass based on 100 parts by mass of the resin contained in the entire interlayer film.

13. Laminated glass comprising the interlayer film for laminated glass according to any of claims 1 to 12, and a pair of glass members laminated with the interlayer film for laminated glass interposed therebetween.

14. The laminated glass according to claim 13, wherein one of the glass members is inorganic glass and other of the glass members is organic glass.
